# EUROPÄISCHE PATENTANMELDUNG

(11) **EP 1 862 918 A1**
(43) Veröffentlichungstag der Anmeldung: **05.12.2007**
(21) Anmeldenummer: 07018675.4
(22) Anmeldetag: 14.05.2003
(51) Int. Cl.: G06F 17/30

(54) **Kommunikationssystem zum verbesserten Nutzen eines elektrischen Gerätes**

(62) Teilanmeldung aus: 03010802.1
(71) Anmelder: Beck, Wilfried, 65191 Wiesbaden (DE)
(72) Erfinder: Beck, Wilfried, 65191 Wiesbaden (DE)
(74) Vertreter: Aue, Hans-Peter

(57) **Zusammenfassung**

Die Erfindung schlaegt ein Kommunikationssystem vor, mit mindestens einem elektrischen Geraet (2), einem Server (1), wobei das Geraet mit dem Server vernetzt ist, auf dem Server relevante Daten des Geraets abgebildet sind sowie der Server mittels Internet mit einem Call-Center (5) verbindbar ist. Auf Anforderung besitzt das Call-Center Zugang zum Server bzw. dem Geraet, so dass durch externe Aktivitaet des Centers ein gewuenschter Zustand des Geraetes herbeigefuehrt werden kann.

## Beschreibung

Die Computertechnik ermöglicht es, elektrische Geräte so auszustatten, das sie die unterschiedlichsten Funktionen aufweisen und demzufolge einen umfassenden Nutzen für den Anwender bieten können. In aller Regel wird der Nutzer diese unterschiedlichen Anwendungsmöglichkeiten nicht nutzen können, weil hierfür ein sehr komplexes Verständnis des Geräts erforderlich ist. Da die jeweiligen Anwendungen nur selten gebraucht werden, ist dem Nutzer diese Kenntnis nicht geläufig. Bedienungshandbücher sind oft mal nur sehr schwer verständlich und bedingen, dass der Nutzer auf vielfältige Anwendungsmöglichkeiten seines Geräts verzichtet.

Insbesondere kann der Anwender kaum die von der Industrie anvisierten Automatisierungsaufgaben betreffend den Einsatz von Geraeten im Haus verstehen, geschweige denn Geraete entsprechend bedienen. Es wird ein Streit um die bestmoegliche Bedien-Ergonomie mit unterschiedlichen Ansaetzen - zu Lasten des Kunden - von den Herstellern bereits praktiziert, der zur Ablehnung der Technik fuehren kann. Dieser anwachsende "Technikfrust" und die finanziell hohen Aufwendungen fuer die einzelnen Automatisierungsloesungen sorgen fuer eine sehr verzoegerte Umsetzung. Abgesehen hiervon muessen regelmaessige Unterhalts- und Wartungskosten von jedem Hersteller dem Kunden neu verkauft werden und fuehren speziell in Privathaushalten zur schnellen Ablehnung.

Aus der DE 100 56 490 A1 ist ein Verfahren und eine Vorrichtung zur Bereitstellung von Gebrauchsanleitungen fuer Hausgeraete bekannt. Um eine verbesserte Versorgung von Kunden mit Gebrauchsanleitungen fuer Hausgeraete zu schaffen wird vorgeschlagen, dass eine Meldung zur Anforderung einer aktuellen Gebrauchsanleitung von einem an ein verteiltes Netzwerk angeschlossenen Hausgeraet aus an einen Dienstleister abgesendet und die Betriebsanleitung ueber das verteilte Netz an einen Standort des Hausgeraetes empfangen wird. Der Nutzer des Geraetes erhaelt somit nur im konkreten Anforderungsfall eine aktuelle Gebrauchsanleitung, die exakt auf sein Geraet zutrifft. Hiermit ist aber immer noch der vorbeschriebene Nachteil verbunden, dass der Nutzer sich muehsam mit dem Inhalt der Gebrauchsanleitung auseinandersetzen muss. Zum Umsetzen der Gebrauchsanleitung ist unter Umstaenden ein recht hoher technischer Sachverstand erforderlich, ueber den nicht jeder Nutzer verfuegt.

Aus der DE 100 56 491 A1 ist ein Verfahren und eine Vorrichtung zur Verbesserung von Wartung und Service an Hausgeraeten bekannt. Es wird vorgeschlagen, dass eine Meldung zur Anforderung von Service und/oder Wartungspersonen von einem an ein Netzwerk angeschlossenen Hausgeraet aus an einen Dienstanbieter abgesendet wird. Der Nutzer des Geraetes muss damit keine Unterlagen oder Verzeichnisse von Service-Telefonnummern mehr konsultieren, da die erste Ansprechstelle fuer den Service das Hausgeraet selbst ist. Von einer Servicestelle oder einem zustaendigen Kundendienst aus kann eine Ferndiagnose an dem Hausgeraet ueber das Netzwerk gestartet werden. Damit entfallen alle Fragen zu den Symptomen einer Stoerung an den Kunden selber, und der Kundendienst kann bedarfsgerecht und optional auf den Kundendiensteinsatz vorbereitet werden. Notfalls koennen bei der Planung eines Kundendiensteinsatzes auch nicht vorraetige Teile beim Hersteller angefordert werden.

Aufgabe der Erfindung ist es, ein Kommunikationssystem sowie ein Verfahren zum verbesserten Nutzen eines elektrischen Geraetes zu schaffen, das es dem Nutzer des Geraets ermoeglicht, kompetente Hilfe betreffend die Nutzung des Geraets zu erhalten.

Die Erfindung schlaegt ein Kommunikationssystem vor, mit mindestens einem elektrischen Geraet, einem Server, wobei das Geraet mit dem Server vernetzt ist, auf den Server relevante Daten des Geraets abgebildet sind, sowie der Server mittels Internet mit einem Call-Center verbindbar ist.

Das Call-Center kann auch nach dem Intranet-Prinzip arbeiten und als geschlossenes System Verbindungen an zum Beispiel Hotel-Concierge oder Familienmitglied im Buero herstellen. Die Daten auf dem Server liegen in der Verfuegbarkeit des technischen Geraeteinhabers, das heisst Kunden.

Wesentlich ist bei dem erfindungsgemaessen Kommunikationssystem somit, dass nicht nur der Nutzer unmittelbar Zugriff zu dem elektrischen Geraet hat und dieses bestimmungsgemaess, somit im Rahmen aller moeglichen Bedienungen nutzen kann, sondern dass ein externer, kompetenter Dritter, vorliegend das Internet-Call-Center gleichfalls Zugriff zum Geraet bzw. ueber den Server zum Geraet hat. Fuehlt sich der Nutzer des Geraetes mit einer Bedienfunktion ueberfordert, braucht er nicht umstaendlich in Bedienungsanleitungen blaettern, sondern muss nur den Kontakt zum Internet-Call-Center aufnehmen. Dort erhaelt er kompetente Hilfe, indem der dort angetroffene kompetente Ansprechpartner entweder angibt, welche Bedienschritte der Nutzer unmittelbar herbeifuehren muss, um zum gewuenschten Ziel zu gelangen, oder aber die kompetente Person im Internet-Call-Center diese Schritte unmittelbar durch Zugriff auf den Server bzw. das Geraet herbeifuehrt. In diesem, letztgenannten Fall braucht der Nutzer gegenueber dem Internet-Call-Center nur seine Wuensche aeussern, die durch dieses erfuellt werden.

Durch diese Verlagerung der auszufuehrenden Vorgaenge auf das Internet-Call-Center koennen komplexe Funktionen ohne Einarbeitung, d.h. ohne sich mit einem Handbuch beschaeftigen zu muessen, umgesetzt werden, naemlich Funktionen wie Musik und Musikbestellung, E-Mail, Alarm, Haustechnik, Terminerinnerung, beispielsweise Wecken, medizinische Alarme usw.. Dies ist durchgaengig moeglich durch die gesamte Hausautomatisierung. Durch dieses Kommunikationssystem wird der Kunde emotional motiviert, ein Hausnetzwerk installieren zu lassen. Die dabei gewonnene Infrastruktur kann von der Hausautomatisierung genutzt werden. Anfallende Unterhalts- und Wartungskosten fuer das Netzwerk und die Bedienung werden dann diesem taeglich benutzten Bereich zugerechnet und vom Nutzer leichter akzeptiert.

Bei dem erfindungsgemaessen Kommunikationssystem wird somit auf Anforderung des Nutzers der Server mittels Internet mit dem Call-Center verbunden. Das Intemet-Call-Center kann ueber das Internet auf den Server und/oder das Geraet zugreifen.

Bei dem mit dem Server vernetzten elektrischen Geraet kann es sich um jegliches elektrisches Geraet handeln, wobei hierunter auch ein bewegliches elektrisches Geraet verstanden wird. Gedacht ist beispielsweise an Handys oder elektrische Geraete in einem Fahrzeug, insbesondere in einem Auto. Das Kommunikationssystem ermoeglicht es dem Nutzer, kompetente Hilfe betreffend die Nutzung dieses elektrischen Geraetes zu erhalten. Der Server kann sich durchaus im Geraet direkt befinden. Der Server kann sich durchaus auch an beliebiger Stelle im Internet befinden. Es ist denkbar, dass der Server aufklebbar ist, beispielsweise kann er unmittelbar auf dem Geraet aufgeklebt sein. So ist es denkbar, statt eines am Geraet angebrachten Barcodes den Server vorzusehen. Der Begriff des Call-Centers ist umfassend zu verstehen. Ansprechpartner bei dem Call-Center kann eine Person oder ein Sprach-Automat sein. In diesem Sinne ist es denkbar, dass der erste Kontakt zum Intemet-Call-Center mit einem Sprach-Automat des Call-Centers herbeigefuehrt wird und nur dann, wenn der Sprach-Automat die Beduerfnisse des Nutzers nicht befriedigen kann, statt der Roboterstimme eine Person mit dem Nutzer kommuniziert.

In der einfachsten Ausfuehrung ist der Server als Black-Box-Server ausgebildet. An ihn koennen die unterschiedlichsten Geraete angeschlossen sein. Bei einer Musikanlage sind dies beispielsweise den einzelnen Zimmern zugeordnete Room-Displays, die insbesondere Lautsprecher, Anzeigen und Eingabetastaturen aufweisen. Eine Taste ist insbesondere vorgesehen, um die Verbindung von Server und Internet-Call-Center auf Anforderung des Nutzers herzustellen. Diese Taste hat somit die Funktion einer "Hilfe-Taste". Ueber den Lautsprecher, der ueblicherweise der Wiedergabe der Musik dient, sowie ein Mikrophon, kann beim Betaetigen der Hilfetaste die Kommunikation mit dem Internet-Call-Center gefuehrt werden. Eventuell unmittelbar am Room-Display vorzunehmende Einstellungen auf Anweisung des Internet-Call-Centers koennen ueber andere Eingabetasten vorgenommen werden, sofern diese Einstellungen nicht unmittelbar vom Internet-Call-Center aus erfolgen. Der Black-Box-Server ist beispielsweise mittels eines Modem mit dem Internet verbunden. Das Internet-Call-Center kann sich an einem beliebigen Ort der Erde befinden.

Bei Betaetigen der "Hilfe-Taste" wird vorzugsweise das Handbuch sowie Anzeige und Tastatur des Geraetes, das bedient werden soll, ueber das Internet zum Service-Anbeiter weitergeleitet. Mit diesem kann der Nutzer insbesondere frei sprechen, der Service-Anbieter kann fuer ihn das Geraet bedienen.

Das Kommunikationssystem laesst sich erweitern, indem der Black-Box-Server nicht nur mit einem oder mehreren Room-Displays, sondern auch mit einem mit einer eigenen Software versehenen PC oder kabellos mittels Wireless LAN (WiFi) oder mit Laptop mit WiFi oder PDA mit WiFi verbunden ist. Bei Verwendung eines PC wird beispielsweise auf dessen Bildschirm der Room-Display transferiert. Entsprechendes gilt fuer die Verwendung des Laptop.

Das Kommunikationssystem laesst sich noch weiter erweitern, wenn der Server nicht als Black-Box ausgebildet ist, sondern eine offene Plattform darstellt. Ein solcher offener Computer hat gegenueber einer Black-Box den Vorteil, dass er manipuliert, somit entsprechend den konkreten Anforderungen nachbearbeitet werden kann.

Wie vorstehend dargelegt, ist die Erfindung nicht auf ein Kommunikationssystem im Zusammenhang mit einer Musikanlage, insbesondere einer Multiroom-Musikanlage auf IT-Basis fuer die moderne Hausautomatisierung beschraenkt. Es kann sich um jedes beliebige elektrische Geraet handeln, beispielsweise eine Steuerung einer Haustechnik oder ein medizinisches Ueberwachungsgeraet.

Die Erfindung schlaegt ferner ein Verfahren zum verbesserten Nutzen eines elektrischen Geraetes vor, wobei relevante Daten des Geraetes ueber einen Server einem Internet-Call-Center zur Verfuegung gestellt werden, derart, dass durch externe Aktivitaet des Internet-Call-Centers ein gewuenschter Zustand des Geraets herbeigefuehrt werden kann. Dieser gewuenschte Zustand des Geraetes kann durch unmittelbaren Zugriff des Internet-Call-Centers auf den Server und/oder das Geraet herbeigefuehrt werden oder aber durch den Nutzer des Geraets selbst, der die zum Erreichen des verbesserten Nutzen des elektrischen Geraets erforderlichen Informationen vom Internet-Call-Center erhaelt. Das Internet-Call-Center und der Nutzer kommunizieren bevorzugt verbal, es ist aber gleichfalls denkbar, dass die Informationen schriftbildlich oder ausschliesslich durch Bilder oder Daten uebermittelt werden.

Im Sinne der Erfindung ist es nicht erforderlich, dass die Kontaktaufnahme mittels einer Taste, die die Funktion einer "Hilfe-Taste" besitzt, erfolgt. Die Kontaktaufnahme kann beliebig erfolgen, beispielsweise auf einem Bildschirm per Mouseklick oder Tastendruck ausgeloest werden. Es ist auch denkbar, dass ohne Tastendruck oder dergleichen, somit automatisch der Kontakt zum Internet-Call-Center ueber das IP (Internet-Protokoll) hergestellt werden kann. Unter dem Aspekt der Automatisierung der Haustechnik wird diese Verbindung beispielsweise dann von allein herbeigefuehrt, wenn bei einer Heizungsanlage eine Fehlermeldung auftritt, z. B. wenn eine kritische Heiztemperatur ueberschritten worden ist. Diese Information wird im Internet-Call-Center zur Verfuegung gestellt, dass dann auf das Geraet einwirkt oder einen Dritten informiert. Ein weiteres bevorzugtes Anwendungsgebiet ist unter diesem Aspekt die Brandmeldung durch Vernetzung eines elektrischen Brandmelders mit dem Internet-Call-Center. Es handelt sich somit um ein Kommunikationssystem, bei dem beim Eintreten bestimmter Umstaende beim elektrischen Geraet ueber den Server und das Call-Center durch externe Aktivitaet des Call-Centers eine automatische Reaktion erfolgt.

Weitere Merkmale der Erfindung sind in den Unteranspruechen, der Beschreibung der Figuren und den Figuren selbst dargestellt, wobei bemerkt wird, dass alle Merkmale sowie Kombinationen von Merkmalen erfindungswesentlich sind.

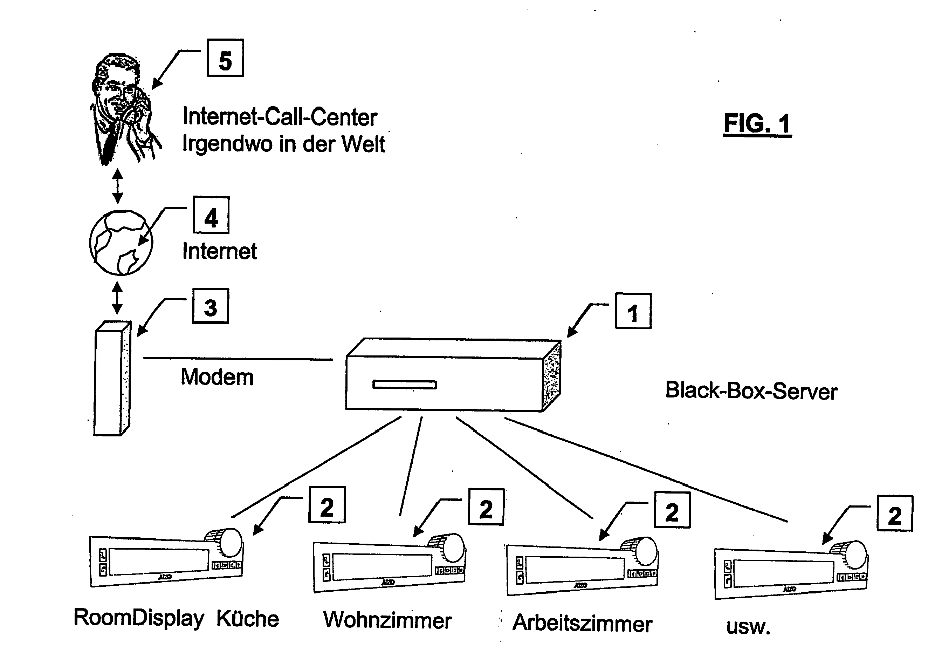

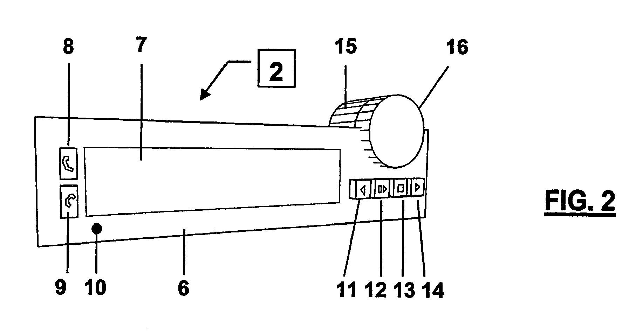

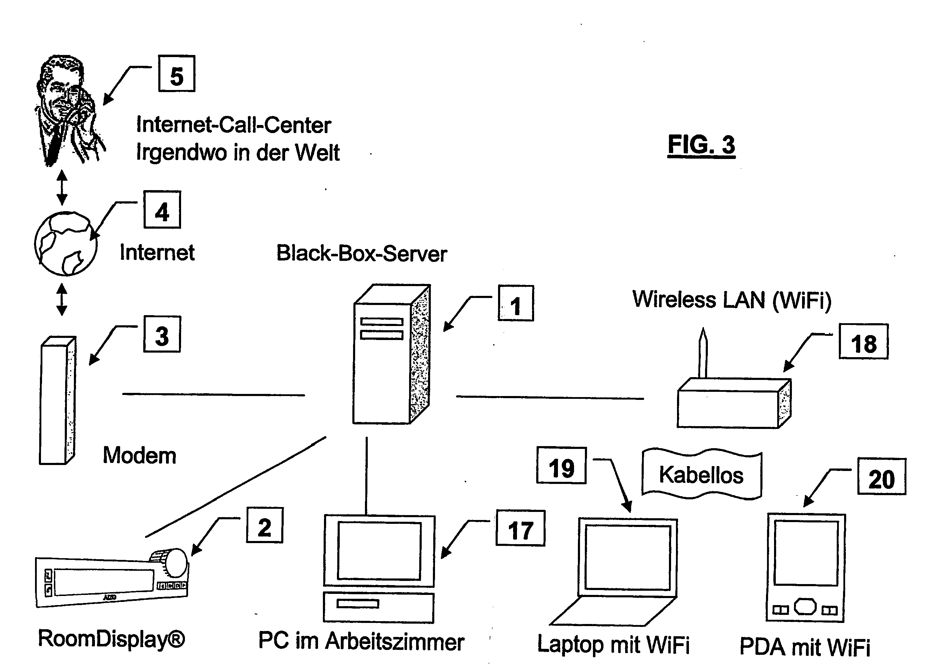

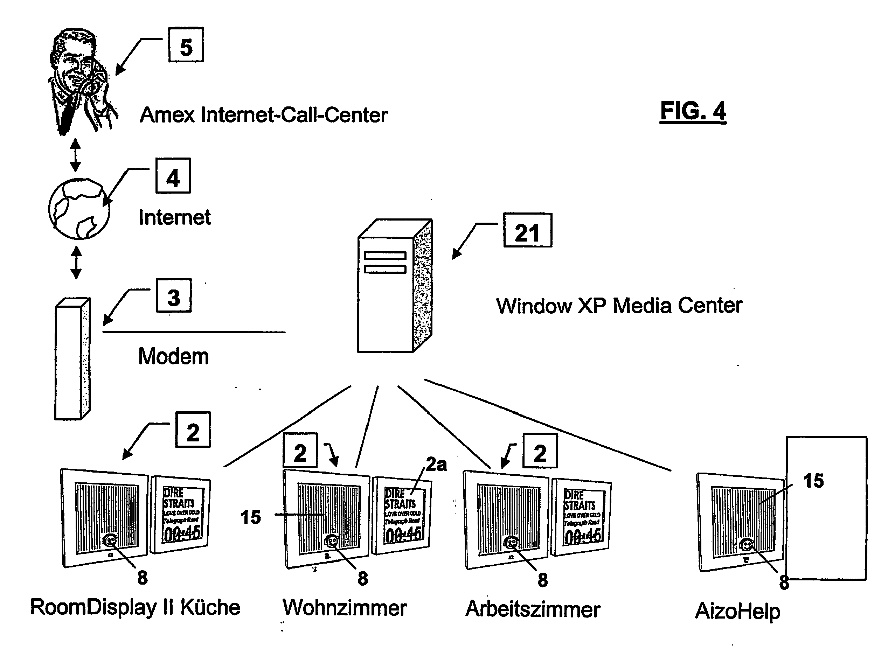

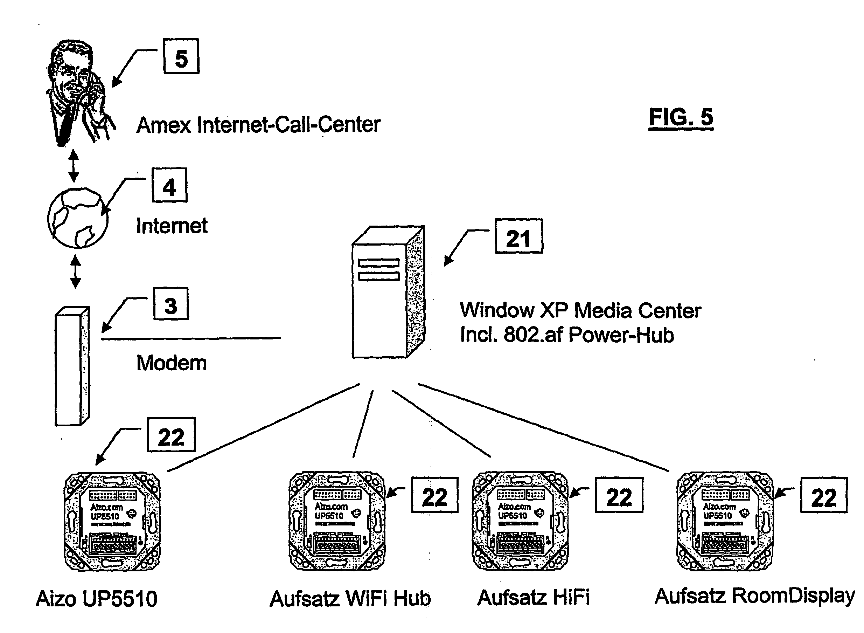

In den Figuren ist die Erfindung anhand mehrerer Ausfuehrungsformen fuer den Anwendungsbereich einer Multiroom-Musikanlage auf IT-Basis fuer die moderne Hausautomatisierung dargestellt, ohne hierauf beschraenkt zu sein. Es zeigt: Figur 1 eine sehr einfache Ausfuehrung des erfindungsgemaessen Kommunikationssystems unter Verwendung eines Black-Box-Servers, Figur 2 eine Darstellung der in Figur 1 gezeigten Room-Displays, Figur 3 ein gegenueber der Ausfuehrungsform nach Figur 1 erweitertes Kommunikationssystem, nach wie vor unter Verwendung eines Black-Box-Servers, Figur 4 ein gegenueber den Ausfuehrungsformen nach den Figuren 1 und 3 erweitertes Kommunikationssystem unter Verwendung eines offenen Computers und Figur 5 ein Kommunikationssystem gemaess Figur 4 mit veranschaulichtem Grundmodul zum Anschliessen unterschiedlicher Geraete.

Das Kommunikationssystem nach Figur 1 weist einen Black-Box-Server 1 auf, an den Room-Displays 2 angeschlossen sind, die insbesondere in der Kueche, dem Wohnzimmer, einem Arbeitszimmer des Hauses usw. angeordnet sind. Der Black-Box-Server 1 steht mit einem Modem 3 in Verbindung, das mittels Internet 4 die Verbindung zu einem Internet-Call-Center 5 herstellt, das sich irgendwo in der Welt befindet.

Figur 5 veranschaulicht den Aufbau des jeweiligen Room-Displays 2: In ein Gehaeuse 6 ist ein Grafik-Display 7 integriert. Das Gehaeuse 6 ist ferner mit einer Hilfetaste 8, einer Taste 9 zum Beenden des Gespraeches sowie einem Mikrofon 10 versehen. Im Zusammenhang mit der Darbietung von Musik ist eine Taste 11 mit der Funktion "Zurueck", eine Taste 12 mit der Funktion "Play-Pause", eine Taste 13 mit der Funktion "Stop" und eine Taste 14 mit der Funktion "Weiter" in das Gehaeuse 6 integriert. In diesem sind ferner ein Lautsprecher 15 und ein Lautstaerke- und Auswahldrehknopf 16 gelagert.

Basisfunktionen des Room-Displays sind beispielsweise: Multiroom-Musikanlage und Jukebox mit beliebig vielen CDs, auswaehlbar nach Kuenstlern, Album, Genre, Titel und Lieblingssongs mit "Playlisten" Party-Betriebsart zum Spielen derselben Musik in allen Raeumen kompaktes Design, Front wie Autoradio, aber flach wie ein Bild Internet-Radio ueber tausend Sender aus der gesamten Welt eingebauter Minilautsprecher und Stereoanlagenanschluss

Sonderfunktionen des Room-Displays sind insbesondere: eingebaute Hilfe-Taste zum Verbinden mit Internet-Call-Center Fernbedienung mit weiteren Funktionen eingebaute Internet-Atom-Uhr mit Weckfunktion Vorbereitung fuer Internet-Telefonie Temperatur-, Feuchte- und Lichtsensor Stromversorgung ueber Datenkabel.

Denkbare Optionen des Room-Displays sind beispielsweise: Kopfhoereranschluss Nahbereichsfunk Bluetooth fuer PDA, Laptop, Headset oder Medizintechnik Funkverbindung zu Funklautsprechern Lichtsteuerung ueber Room-Display und Fernbedienung eHome Steuerung ueber Room-Display, Fernbedienung oder PDA Ladestation und Sync-Station fuer Handy oder PDA E-Mail Empfang oder Vorlesen Steuern von Outlook ueber Stimme

Aufgrund der Hilfetaste 8 ist folgendes Szenario denkbar: Der Nutzer des Geraetes bzw. Room-Displays betaetigt die Hilfetaste 8. Das Betaetigen der Hilfetaste erzeugt einen Anruf beim Internet-Call-Center ohne unmittelbare Telefonkosten, da er ueber "Internetfreisprechen" erfolgt und benoetigt ueberdies keine Identifikation fuer Grundfunktion, da ueber "Room-Display" identifiziert wird. Das Internet-Call-Center meldet sich beispielseise: "Guten Tag, Haus von Familie..., wie kann ich Ihnen helfen?". Antwort aus dem Haus von Familie... beispielsweise: "ich komme mit meiner Raummusikanlage nicht klar... was muss ich machen, um Madonna zu spielen?". Antwort des Internet-Call-Centers beispielsweise: "soll ich Madonna fuer Sie suchen und starten oder Ihnen Schritt fuer Schritt assistieren?". Dies ist moeglich, da die Displays 2 komplett im Black-Box-Server 1 abgebildet sind und gleichzeitig beim Internet-Call-Center Bildschirm und das Display gesehen und bedient werden koennen. Hierdurch lassen sich an den Server 1 angeschlossene Dienste einfachst ueber das Internet-Call-Center 5 in Anspruch nehmen.

Der Ausfuehrungsform nach der Figur 3 ist zu entnehmen, dass nicht nur ein oder mehrere Room-Displays 2 an den Black-Box-Server 1 angeschlossen sind, sondern auch ein PC 17, beispielsweise im Arbeitszimmer sowie kabellos ein Wireless LHN (WiFi) 18 sowie ein Laptop mit WiFi 19 und ein PDA mit WiFi 20.

Bei der Ausfuehrungsform nach Figur 4 ist statt eines Black-Box-Servers 1 ein offener Computer 21, beispielsweise ein Window XP Mediacenter vorgesehen, der ueber das Modem 3 und Internet 4 mit dem Internet-Call-Center 5 in Verbindung steht. Der Computer 21 ist mit diversen anders gestalteten Room-Displays 2 verbunden, die beispielsweise in der Kueche, dem Wohnzimmer und einem Arbeitszimmer angeordnet sind und die jeweils eine Hilfetaste 8 aufweisen. Zum jeweiligen Room-Display 2 ist das eigentliche Display 2a verdeutlicht, sowie der Lautsprecher 15 mit der in diesen integrierten Hilfetaste 8. Durch Betaetigen dieser Taste kann im aufgezeigten Sinne der Kontakt mit dem Internet-Call-Center 5 aufgenommen werden. Rechts ist in Figur 4 eine Modifizierung gezeigt, bei der gegenueber dem Room-Display 2 nach dieser Figur auf das eigentliche Display 2a verzichtet worden ist und demzufolge nur der Lautsprecher 15 mit Hilfetaste 8 vorgesehen ist.

Die Ausfuehrungsform nach der Figur 5 stimmt mit der Ausfuehrungsform nach der Figur 4 hinsichtlich der Anbindung des Computers 21 an das Internet-Call-Center 5 ueberein. Im Unterschied zur Ausfuehrungsform nach Figur 4 sind in Figur 5 die Verbindungen des Computers 21 zu aus dem Stand der Technik bekannten Grundmodul-Unterputzdosen dargestellt, die Anschluesse fuer die vorstehend beschriebenen Funktionen und insbesondere denkbaren Optionen aufweisen. Auf diese Unterputzdosen 22 werden beispielsweise die unterschiedlichen Displays aufgesteckt.

Gemaess einer Weiterbildung der Erfindung kann auch in einer zur Steuerung der Hilfetaste 8 vorgesehenen Fernbedienung eine Hilfetaste vorgesehen sein, die die Verbindung zum Internet-Call-Center 5 herstellt und dann sogar ein Telefonieren ueber die Fernbedienung - durch Vermittlung -ermoeglicht.

Möglich ist auch ein Verfahren zum verbesserten Nutzen eines elektrischen Geraetes 2,17, 18, 19, 20, wobei relevante Daten des Geraetes 2,17, 18,19, 20 ueber einen Server 1, 21 einem Internet-Call-Center 5 zur Verfuegung gestellt werden, derart, dass durch externe Aktivitaet des Internet-Call-Centers 5 ein gewuenschter Zustand des Geraetes 2,17, 18,19, 20 herbeibefuehrt werden kann, und/oder wobei der gewuenschte Zustand des Geraets 2,17, 18,19, 20 unmittelbar durch Einwirken des Internet-Call-Centers 5 auf den Server 1,21 und/oder das Geraet 2,17, 18,19, 20 herbeigefuehrt werden kann, und/oder wobei das Internet-Call-Center 5 den Nut- zer des Geraets 2,17, 18,19, 20 informiert und der Nutzer aufgrund der gege- benen Information den gewuenschten Zustand des Geraets 2,17, 18,19, 20 herbeifuehrt, und/oder wobei das Internet-Call-Center 5 und der Nutzer per Sprache, Schrift und/oder Bild kommunizieren.

## Patentansprüche

1. Kommunikationssystem, mit mindestens einem elektrischen Gerät (2, 17, 18, 19, 20), einem Server (1, 21), wobei das Gerät (2, 17, 18, 19, 20) mit dem Server (1, 21) vernetzt ist, auf dem Server (1, 21) relevante Daten des Geräts (2, 17, 18, 19, 20) abgebildet sind, sowie der Server (1,21) mittels Internet (4) mit einem Call-Center (5) verbindbar ist.

2. System nach Anspruch 1, wobei der Server (1,21) als Black-Box-Server (1) oder als offene Plattform (21), insbesondere offener Computer (21), ausgebildet ist.

3. System nach Anspruch 1 oder 2, wobei dem Server (1,21) eine Vielzahl Geraete (2,17, 18,19, 20) zugeordnet sind.

4. System nach Anspruch 3, wobei das Geraet eine Musikanlage (2), beispielsweise Multiroom-Musikanlage mit Videoserver, und/oder ein Geraet der Haustechnik, beispielsweise eine Steuerung einer Hausheizung, und/oder ein medizinisches Geraet, beispielsweise ein medizinisches Ueberwachungsgeraet ist.

5. System nach einem der Ansprueche 1 bis 4, wobei das Geraet ein PC (17), Laptop (19), PDA (20), Wireless LAN (18) oder Room-Display (2) ist.

6. System nach einem der Ansprueche 1 bis 5, wobei die Verbindung vom Server (1, 21) und Internet-Call-Center (5) mittels Betaetigen einer Hilfe-Taste (8) des Geraets (2) erfolgt.

7. System nach einem der Ansprueche 1 bis 6, wobei die Anforderung an den Server (1,21) unmittelbar per Kabel oder kabellos, insbesondere per Fernbedienung, er- folgt.

8. System nach einem der Ansprueche 1 bis 7, wobei die Kontaktaufnahme beim Call-Center (5) mit einer Person und/oder einem Sprach-Automaten erfolgt.
